# EUROPEAN PATENT SPECIFICATION

(11) **EP 4 687 097 B1**
(45) Date of publication and mention of the grant of the patent: **19.08.2026**
(21) Application number: 25190065.0
(22) Date of filing: 17.07.2025
(51) Int. Cl.: G06T 7/00, G06T 7/11, G06T 7/136, G06T 7/187, G06T 7/194, G01N 1/30

(54) **METHOD FOR CONTROLLING A CLEARING OF A BIOSPECIMEN, PARTICULARLY FOR AN AUTOMATED TISSUE PRESERVING HISTOPATHOLOGIC ANALYSIS**
VERFAHREN ZUR KONTROLLE EINER KLÄRUNG EINER BIOPROBE, INSBESONDERE FÜR EINE AUTOMATISIERTE GEWEBEKONSERVIERENDE HISTOPATHOLOGISCHE ANALYSE
PROCÉDÉ DE CONTRÔLE D'UNE CLARIFICATION D'UN BIOSPÉCIMEN, NOTAMMENT POUR UNE ANALYSE HISTOPATHOLOGIQUE PRÉSERVANT LES TISSUS AUTOMATISÉE

(30) Priority: 29.07.2024 IT 202400017608
(43) Date of publication of application: 04.02.2026
(73) Proprietor: Limaa Technologies GmbH, 14195 Berlin (DE)
(72) Inventor: Mohr, Fabian, 51519 Odenthal (DE); Hägerling, René, 22529 Hamburg (DE); Kalozi, Manuel, 13509 Berlin (DE)
(74) Representative: Lippert Stachow Patentanwälte Rechtsanwälte Part.mbB

(56) References cited:
- US-A1- 2019 302 053
- ENFIELD ET AL: "Single point and imaging measurements of the optical clearing process", NOVEL OPTICAL INSTRUMENTATION FOR BIOMEDICAL APPLICATIONS III, vol. 6631, 66311E, 2007, Proc. ofSPIE-OSA Biomedical Optics, XP040243059
- LIU LINA ET AL: "F-CUBIC: a rapid optical clearing method optimized by quantitative evaluation", BIOMEDICAL OPTICS EXPRESS, vol. 13, no. 1, 7 December 2021 (2021-12-07), United States, pages 237 - 251, XP093248083, ISSN: 2156-7085, DOI: 10.1364/BOE.442976

## Description

The invention relates to a method for controlling an optical clearing of a biospecimen, particularly for an automated tissue preserving histopathologic analysis, wherein the biospecimen is stored in an optically transparent container, which is filled with a clearing solution.

Histopathological analysis of tissue specimens is a multi-step process performed in research and development or clinical pathology laboratories. These steps include, among other things, embedding of the sample in paraffin, dehydration, physical sectioning of tissue blocks, transfer to glass slides, staining, sealing, microscopy and/or digitization of sample slides using slide scanners. In the past, there have been initiatives to reduce manual hands-on-time by developing automation solutions for a number of these single steps, which however lack a high sample throughput and only match partly the efficiency of the manual sample handling. A full automation of the entire process is currently not or only to a limited degree possible as the glass slide based histology approach has intrinsic limitation in regards of preparation time, quality and completeness of the tissue.

In the context of detailed phenotyping of specimens and precision medicine, staining for multiple biomarkers in the identical sample becomes of high relevance. Combining this information with genetic or proteomic data from the identical sample is key to improve patient outcome. This is only possible with a tissue preserving approach which allows multiple types of analysis from the identical sample. This, in particular, has high value in low volume tissue samples, e.g. from fine needle biopsies, because the material cannot be used beyond initial analysis. In addition, the current glass slide based approach results in a high burden to analyse entire tissue specimens and consequently only representative sections are analysed which results in missing spatial information aggravating the interpretation of complex phenotypes, e.g. penetration of tumors through relevant tissue architectural structures. In conclusion, advancements in pathology and histological diagnostics are limited, even though there is a high need for automation to reduce manual work since qualified staff is limited, as well as for improved and more detailed analysis of human tissue samples.

The above-mentioned points indicate that novel approaches for tissue preparation and imaging of entire tissue specimens independent from glass slides are required. Optical tissue clearing presents a suitable method for volumetric imaging combined with multiplex staining of entire tissue specimens. By incubating the specimen in an optical clearing reagent, the specimen becomes translucent, and therefore allows light to penetrate the tissue and consequently increase the accessible and imaging depth for optical sectioning. Available methods for optical clearing and multiplex tissue staining require expensive reagents and time-consuming incubation steps. In addition, the speed and degree of optical transparency varies depending on tissue or organ type as well as pathological entity. To increase the interpretability of such images by trained medical specialists in the field of histopathology an automated approach for optical tissue clearing with high transparency and speed is required.

US 2020/0209118 A1 disclosed the aforementioned approach for tissue preparation and imaging of entire tissue specimens. It discloses a method for preparing an animal tissue for fluorescence microscopy that allows visualization of single cells within mammalian tissues. This document discloses the technological background of visualization of single cells within tissue samples but does not disclose a histopathology analysis of biospecimens suitable for high number of tissue samples currently processed in clinical pathology laboratories.

US 10,591,392 B2 discloses a method of processing biopsy sized tissue samples using fluorescence microscopy. However, the disclosed method is not automated and bases on manual processing of the tissue samples.

Enfield et al.: "Single point and imaging measurements of the optical clearing process", NOVEL OPTICAL INSTRUMENTATION FOR BIOMEDICAL APPLICATIONS III, vol. 6631, 66311E, 2007, XP040243059, Proc. of SPIE-OSA Biomedical Optics, examine the effects of optical clearing agents on ex vivo porcine skin using the immersion method. They developed a model for comparing different aspects of optical clearing agents such as the rate at which the clearing agents enters the tissue and also the reduction in scattering achieved.

Liu et al: "F-CUBIC: a rapid optical clearing method optimized by quantitative evaluation", BIOMEDICAL OPTICS EXPRESS, vol. 13, no. 1, 7 December 2021, pages 237-251, XP093248083, United States, ISSN: 2156-7085, DOI: 10.1364/ BOE.442976, propose a chemical screening method that uses porcine small intestine tissue as the testing sample to quantify the clearing speed of different optical clearing reagents.

Kewin W. Bishop, et al., 'An end-to-end workflow for non-destructive 3D pathology' published on August 6, 2023 under https://doi.org/10.1101/2023.08.03.551845 discloses an end-to-end protocol covering all aspects of a 3D pathology workflow using light sheet microscopy with sufficient detail to perform well-controlled pre-clinical and clinical studies. Guidelines for a broad range of end-users, particularly biologists, clinical researchers and engineers, are presented in a simple tutorial format.

It is therefore an object of the present invention to provide a method for controlling the optical clearing of a biospecimen, particularly for an automated tissue preserving histopathologic analysis, wherein the biospecimen is stored in an optically transparent container, which is filled with a clearing solution.

This object is solved according to the present invention by a method for controlling an optical clearing of a biospecimen, particularly for an automated tissue preserving histopathologic analysis according to claim 1. Preferred embodiments of the method are defined in the dependent claims.

The inventive method for controlling an optical clearing of a biospecimen, particularly for an automated tissue preserving histopathologic analysis, wherein the biospecimen is stored in an optically transparent container, which is filled with a clearing solution, comprises the steps of:
a. illuminating the container by a light source with a light having a pre-defined wavelength;
b. taking images of the container and the biospecimen inside the container;
c. processing the images in a processing unit, wherein the processing unit performs the steps of:
   i. calculating the general average brightness of the images;
   ii. detecting areas in each image having a brightness in a first defined range with respect to the calculated general average brightness;
   iii. detecting areas in each image having a brightness in a second defined range with respect to the calculated general average brightness;
   iv. calculating an area relating to uncleared portions of the biospecimen in the container by considering all areas with a brightness in the first defined range and adding areas with a brightness in the second defined range if the distance to an area with a brightness in the first defined range is within a first defined limit or if the distance to an added area with a brightness in the second defined range is within a second defined limit;
   v. comparing the calculated area to an initial area of the uncleared biospecimen in the container and uniformly increasing the calculated area in all directions until the increased calculated area corresponds to the initial area of the uncleared biospecimen in the container;
   vi. determining a specific average brightness of the increased calculated area;
   vii. repeating steps i. to vi. for the images taken over time and analyzing the change in the determined specific average brightness by:
      I. comparing the change in the determined specific average brightness over time with at least two models for different expected changes of specific brightness over time during optical clearing of biospecimen over time;
      II. choosing one model of the at least two models, which best fits to the change in the determined specific average brightness over time; and
      III. using the chosen model for deciding whether the optical clearing of the biospecimen in the container has reached a required transparency and terminating the optical clearing process when the required transparency has been reached.

The inventive method relates to a biospecimen that is stored in an optically transparent container, which is filled with a clearing solution. The biospecimen is optically cleared over time due to the clearing solution. However, the speed and degree of optical transparency varies depending on tissue or organ type as well as pathological entity. Using the inventive method the optical clearing of the biospecimen is monitored and automatically terminated once the biospecimen is sufficiently clear for further processing, particularly in an automated tissue preserving histopathologic analysis.

According to the method the container containing the biospecimen is illuminated by a light source having a pre-defined wavelength. At the same time, images are taken from the container and the biospecimen inside the container. The images are taken over time to check the progress of the optical clearing of the biospecimen.

The images are processed in a processing unit. First, a general average brightness of the images is calculated. This general average brightness is the basis for further calculations, particularly for detecting the biospecimen in the container. This average brightness is calculated for each image and considers the whole image, i.e. the complete area of the image.

Next, areas are detected in each image having a brightness in a first defined range with respect to the calculated general average brightness. Furthermore, areas are detected having a brightness in a second defined range with respect to the calculated general average brightness.

Based on these detected areas an area relating to uncleared portions of the biospecimen in the container is calculated. All areas with a brightness in the first defined range are considered to relate to an uncleared portion of the biospecimen in the container and are added to the calculated area of the uncleared portion. Areas with a brightness in the second defined range are considered to relate to an uncleared portion of the biospecimen if the distance to an area with a brightness in the first defined range is within a first defined limit and hence are added to the calculated area of the uncleared portion. Furthermore, areas with a brightness in the second defined range are considered to relate to an uncleared portion of the biospecimen if the distance to an added area with a brightness in the second defined range is within a second defined limit and hence are further added to the calculated area of the uncleared portion. The result of this step is a calculated area relating to uncleared portions of the biospecimen in the container.

This calculated area is compared to an initial area of the uncleared biospecimen in the container. The calculated area is uniformly increased until the uniformly increased calculated area corresponds to the initial area of the uncleared biospecimen in the container.

In the next step the processing unit determines a specific average brightness of the increased calculated area. This specific average brightness refers to the biospecimen in the container, particularly to the initial area of the biospecimen. Thus, this area can comprise already cleared parts of the biospecimen and parts that are still uncleared. Therefore, this specific average brightness is an indicator for the progress of the optical clearing of the biospecimen in the container.

The previous processing of the processing unit is repeated for each image taken over time. The specific average brightness of the images over time is further analyzed to detect changes in the specific average brightness over time.

During the analysis the change in the determined specific average brightness over time is compared with at least two models for different expected changes of specific brightness over time during optical clearing of biospecimen over time. The at least two models reflect the different optical clearing behavior of tissue or organ types. Tissue or organ types with similar behavior are covered by the same model.

Based on the comparison a model of the at least two models is chosen, which best fits to the change in the determined specific average brightness over time. This chosen model is used for deciding whether the optical clearing of the biospecimen in the container has reached a required transparency and terminating the optical clearing process when the required transparency has been reached. The change in determined specific average brightness can be compared to a behavior of the specific average brightness of the chosen model and if the determined specific average brightness reaches a sufficient specific average brightness of the chosen model it can be concluded that the biospecimen in the container has reached a required transparency and hence the optical clearing process can immediately be terminated and the further processing of the biospecimen in the container can be initiated, like for example examining the biospecimen in the container using a 3D imaging device like a light-sheet microscope. This reduces the overall process time because the optical clearing process can be immediately stopped once the required transparency has been reached and the next step of the histopathological analysis can be initiated.

The invention focusses not on the total transparency of the material but on its clearing process. During the optical process the program collects a transparency value and a timestamp and combines them to a datapoint. Once an optional threshold for a sufficient amount of data points has been passed, the (nonspecific mathematical) models of the optical clearing process get fed with the data points (step vii). Within their limits and definitions, the models get fitted to minimize their deviation to the real data (step I). Due to the limits and definitions of the models a subsistential deviation remains and the fitting procedure can only reduce it, but is limited in doing so to keep the logic of the models intact. Through this process, specific/adapted models for the optical clearing are being generated every time a new data point is measured.

In a variant of the invention, the initial area of the uncleared biospecimen is defined based on one or more of the earliest images taken from the biospecimen in the container during step b., wherein the initial area is calculated according to steps i. to iv. and includes an average initial area if multiple of the earliest images are used. The first taken images relate to an early stage of the optical clearing process, where the biospecimen in the container has not been cleared at all or only to a very minor degree. Thus, the early images taken at the beginning of the optical clearing process can be used for determining the initial area of the uncleared biospecimen. Since the biospecimen in the container is not fixed it can change its orientation therein. Thus, defining the average initial area from multiple of the earliest images provides a good estimation of the initial area for most cases, i.e. orientations of the biospecimen in the container.

According to an alternative variant, the initial area is received from a method relating to a previous treatment of the biospecimen in the container.

Pursuant to a variant of the invention, the light of the light source has at least a wavelength between 380 nm und 780 nm. This corresponds to the visible lights and neighboring wavelengths.

In a preferred variant of the invention, step vi. considers the brightness of light with a wavelength between 380 nm and 500 nm. This corresponds principally to the blue spectrum of the visible light. Blue light has been found to be particularly suitable for detecting the clearance of a biospecimen because it turned out to have the highest change during the optical clearing process compared to light with over wavelengths. Hence, it provides the best indicator for the clearance of a biospecimen.

According to an advantageous variant of the invention, the method further comprises the step of masking the images before step i., wherein the masking relates to the contours of the container containing the biospecimen. Thus, in a first step the taken images are masked such that only the area of the container is considered during the following method steps. This eliminates outside light interference and provides a focus on the size of the container containing the biospecimen.

Pursuant to an expedient variant of the invention, the first defined range is between 80 % and 100 % of the average brightness, particularly between 90 % and 100 % and further preferably between 92 % and 100 %.

In a further expedient variant of the invention, the second defined range is between 70 % and 92 % of the average brightness, particularly between 70 % and 80, 90 or 92 %. Generally, the upper limit of the second defined range corresponds to the lower limit of the first defined range.

According to a preferred variant of the invention, step iv. further comprises the step of enlarging the calculated area by including edge areas of the added areas. This enlarging of the calculated area during step iv. might reduce the distance to further areas with a brightness in the second defined range so that they fall within the second defined limit and are also added to the calculated area.

Pursuant to an expedient variant of the invention, the enlarging bases on drawing a circle around all added areas with a defined radius and including the encircled areas into the added area. Since the method bases on image processing of the taken images, these drawn circles can have a radius of one or pixel, wherein all areas within drawn circles are included into the calculated area.

In an advantageous variant of the invention, step vii. is initiated the first time after a threshold period. A certain amount of data is required to compare the change in the determined specific average brightness over time with at least two models for different expected changes of specific brightness over time during optical clearing of biospecimen over time. Only if a certain amount of data is available, one of the at least two models can be chosen. Thus, step vii. is initiated the first time after the threshold period, so that sufficient data is available. The threshold period can be defined by a certain amount of collected data or by a time-period.

According to a variant of the invention, step I. bases on the sum of the quadratic difference between the determined specific average brightness over time and the expected changes of specific brightness over time during optical clearing of biospecimen over time of the at least two models, wherein in step II. the model with the smaller sum of quadratic difference is chosen. This reduces the standard deviation and the probability that a model with higher deviation is chosen, which would result in a too early or too late termination of the optical clearing process. Of the most recent specific models, the one with the lowest sum of quadratic difference to the real data points is viewed as the best current representation of the process (step II.). In this sense the models are interpretations of the data, trying to filter out the influence of the precision limit and standard deviation of the measurement. Over the time of the process, it is possible that from one data point to the next the model which matches the real data closest switches. So, for example at data point A (t = 630 seconds) adapted Model 1 matches the data points more closely, but at data point B (t = 631 seconds) adapted Model 2 is closer to the real datapoints.

If at any timepoint the "better matching/ closer to real data" function shows a sufficient optical clearing, the optical clearing step is determined as finished. If the "better matching/ closer to real data" function doesn't show a sufficient optical clearing the process is defined as still ongoing which means the program waits for the next data point being generated.

In this context sufficient optical clearing is defined as the model predicting that there will only be an insignificant change in transparency value after the most recent datapoint.

Pursuant to a preferred variant of the invention, the images in step b. are taken from an opposite side of the container with respect to the light source. Thus, the light of the light source must pass the complete container and hence the biospecimen therein.

In an expedient variant of the invention, step c comprises an initial step of separating a reference channel from the image. Thus, the general average brightness is calculated in step c in the reference channel only. This is useful if a camera with automatic light adaption is used, which can change the overall brightness of the taken image. If step c is limited to a reference channel, this problem with respect to an automatic light adaption is avoided.

The invention further relates to a system for controlling an optical clearing of a biospecimen, particularly for an automated tissue preserving histopathologic analysis, comprising:
an optically transparent container, in which the biospecimen can be stored;
a light source with a light having a pre-defined wavelength for illuminating the optically transparent container;
a camera for taking images of the container and the biospecimen inside the container; and
processing unit for processing the images;
wherein the system is configured to implement the method according to the present invention.

In the following the invention will be further explained with respect to embodiments shown in the attached figures. It shows:
- Fig. 1: a schematic view of a system for controlling an optical clearing of a biospecimen implementing the method according to the invention;
- Fig. 2: a flow diagram of the steps of the method according to the invention; and
- Fig. 3: a flow diagram of the analysis part of the method according to the invention; and
- Fig. 4: a diagram representing two models for different expected changes of specific brightness over time and the change in the determined specific average brightness over time of a biospecimen.

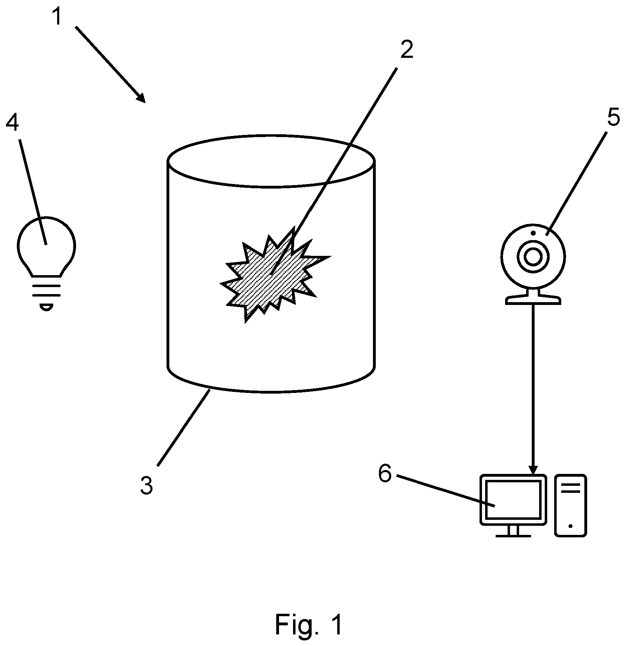

Fig. 1 shows a schematic view of a system 1 for controlling an optical clearing of a biospecimen 2. The system 1 comprises an optically transparent container 3, in which the biospecimen 2 is stored. The system 1 further comprises a light source 4 with a light having a pre-defined wavelength for illuminating the optically transparent container 3. The system 1 comprises a camera 5 for taking images of the container 3 and the biospecimen 2 inside the container 3. The camera 5 forwards the taken images to a processing unit 6 of the system 1 for further processing. The system 1 is configured to implement the method according to the present invention.

The light source 4 and the camera 5 are arranged with respect to the container 3 containing the biospecimen 2 such that the camera 5 takes the images from an opposite side of the container 3 with respect to the light source 4. Thus, the light source 4 and the camera 5 are arranged on opposite sides of the container 3.

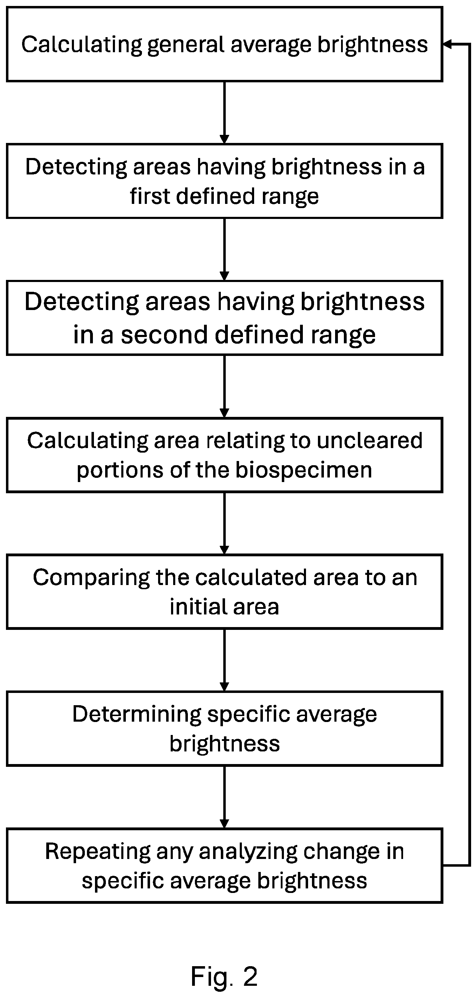

Fig. 2 shows a flow diagram of the steps of the method according to the invention. The following steps are performed by the processing unit 6, which processes the images taken by camera 5 over time of the container 3 containing the biospecimen 2, while the container 3 is illuminated by light source 4.

The processing unit 6 performs at least the following steps:
i. calculating the general average brightness of the images;
ii. detecting areas in each image having a brightness in a first defined range with respect to the calculated general average brightness;
iii. detecting areas in each image having a brightness in a second defined range with respect to the calculated general average brightness;
iv. calculating an area relating to uncleared portions of the biospecimen 2 in the container 3 by considering all areas with a brightness in the first defined range and adding areas with a brightness in the second defined range if the distance to an area with a brightness in the first defined range is within a first defined limit or if the distance to an added area with a brightness in the second defined range is within a second defined limit;
v. comparing the calculated area to an initial area of the uncleared biospecimen 2 in the container 3 and uniformly increasing the calculated area in all directions until the increased calculated area corresponds to the initial area of the uncleared biospecimen 2 in the container 3;
vi. determining a specific average brightness of the increased calculated area; and
vii. repeating steps i. to vi. for the images taken over time and analyzing the change in the determined specific average brightness.

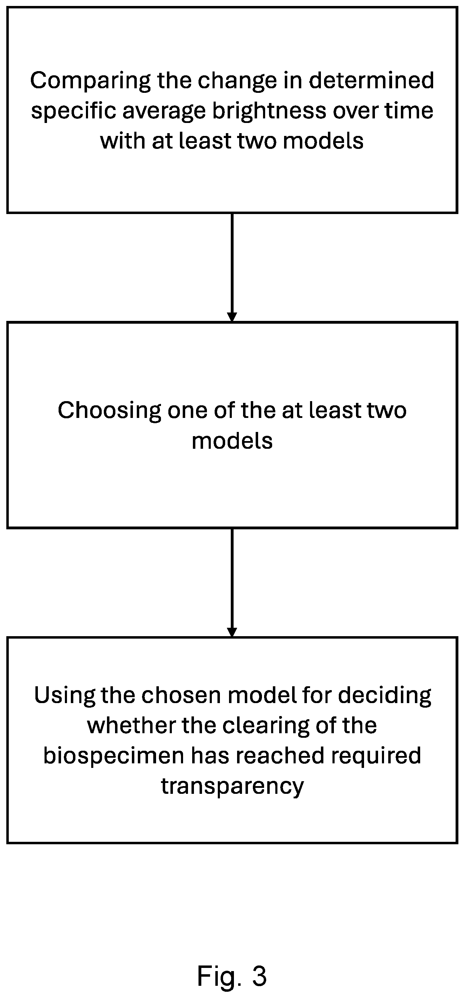

Fig. 3 shows a flow diagram of the analysis performed during step vii. of the method according to the present invention. The analysis comprises the following steps:
I. comparing the change in the determined specific average brightness over time with at least two models 7, 8 for different expected changes of specific brightness over time during optical clearing of biospecimen 2 over time;
II. choosing one model 7, 8 of the at least two models 7, 8, which best fits to the change in the determined specific average brightness over time; and
III. using the chosen model 7, 8 for deciding whether the optical clearing of the biospecimen 2 in the container 3 has reached a required transparency and terminating the optical clearing process when the required transparency has been reached.

According to the present invention the initial area of the uncleared biospecimen 2 can be defined based on one or more of the earliest images taken from the biospecimen 2 in the container 3 during step b., wherein the initial area is calculated according to steps i. to iv. and includes an average initial area if multiple of the earliest images are used. Alternatively, the initial area is received from a method relating to a previous treatment of the biospecimen 2 in the container 3.

The light of the light source 4 has preferably at least a wavelength between 380 nm und 780 nm.

Step vi. particularly considers the brightness of light with a wavelength between 380 nm and 500 nm and does not consider light outside this range.

The method can comprise an optional step of masking the images before step i., wherein the masking relates to the contours of the container 3 containing the biospecimen 2.

The first defined range is for example between 92 % and 100 % of the average brightness and the second defined range is for example between 80 % and 92 % of the average brightness.

Step iv. can further comprise the step of enlarging the calculated area by including edge areas of the added areas. The enlarging bases preferably on drawing a circle around all added areas with a defined radius and including the encircled areas into the added area.

Pursuant to a preferred variant of the invention, step vii. is initiated the first time after a threshold period.

Step I. of the analysis shown in Fig. 3 preferably bases on the sum of the quadratic difference between the determined specific average brightness over time and the expected changes of specific brightness over time during optical clearing of biospecimen over time of the at least two models 7, 8, wherein in step II. the model 7, 8 with the smaller sum of quadratic difference is chosen.

Step c can comprise an initial step of separating a reference channel from the image.

Fig. 3 shows a diagram representing two models 7, 8 for different expected changes of specific brightness over time and the change in the determined specific average brightness over time of a biospecimen 2.

The first model 7 is represented by dashed line and the second model 8 is represented by solid line, while the change in the determined specific average brightness over time of a biospecimen 2 is represented by dots.

The first model 7 and second model 8 are functions of limited growth (*e^{-x}*). Particularly, they base on the following function: $f \left(x\right) = m ∗ {e}^{\left(-d∗x\right)} + c$

The value f is the brightness of the biospecimen 2 expected by the respective model 7,8, particularly the average brightness of the camera's 5 blue channel on the specified area.

The value x is the time in seconds and c is the final transparency value of the biospecimen 2 at x → ∞.

The attenuation m expresses how far the curve is from the final transparency value at time x=0. The value d determines how quickly m decreases, i.e. how quickly the final transparency value is actually approached.

The first model 7 and the second model 8 each comprise two functions of limited growth. These functions are linked to each other via the variable z. The variable z represents the point in time at which the function f₁ (i.e. for all x≤z) changes to the function f₂ (i.e. for all x > z). ${f}_{1} \left(x\right) = {m}_{1} ∗ {e}^{\left(-{d}_{1}∗x\right)} + {c}_{1}$ ${f}_{2} \left(x\right) = {m}_{2} ∗ {e}^{\left(-{d}_{2}∗\left(x-z\right)\right)} + {c}_{2}$

The first model 7 and the second model 8 differ from each other with respect to the transition from the first function f₁ to the second function f₂.

The first model 7 relates to a smooth transition between both functions, i.e. the expected brightness value at point z is identical (*f*₁(*z*) *= f*₂(*z*)) and the gradient at point z is also identical (*f*₁'(*z*) *= f*₂'(*z*)).

To ensure this, m₂ and c₂ are formulated on the basis of these requirements: ${m}_{2} = \frac{{m}_{1} ∗ {d}_{1}}{{d}_{2} ∗ {e}^{\left({d}_{1}∗z\right)}}$ ${c}_{2} = {m}_{1} ∗ {e}^{\left(-{d}_{1}∗z\right)} + {c}_{1} - {m}_{2}$

Thus, the remaining variables in the first model 7 are only m₁, d₁, c₁, d₂ and z.

For these, start values and limits are required for optimization using the quadratic deviation, which are for example:

| variable | start value | minimum | maximum |
|---|---|---|---|
| m1 | -8 | -400 | 400 |
| d1 | 0,0005 | 0,0001 | 1 |
| c1 | 170 | 110 | 1000 |
| d2 | 0,01 | 0,005 | 1 |
| z | running time (in s)/4 | 0 | running time (in s)/4 |

The second model 8 relates to an alternative transition between the two functions. The brightness value at time z is also identical (f₁(z)= f₂(z)). However, the gradient is not necessarily the same. Only a limitation can be made: ${c}_{2} = {m}_{1} ∗ {e}^{\left(-{d}_{1}∗z\right)} + {c}_{1} - {m}_{2}$

Instead, there is a requirement that after 100 seconds the transparency value of the second e-function must have increased by a value of at least T=2. This requirement is achieved via the limits (i.e. maximum and minimum) of the variable m₂. The threshold T is available in the following table in the row of m₂ in the "Start value" and "Maximum" columns.

The variable m₂ is optimised in relation to d₂. To make this possible, d₂ is given the initial value dᵢₙᵢₜᵢₐₗ = 0.005, which is used in an initial optimization that precedes the actual optimization.

This means that the start and limit values are:

| variable | start value | minimum | maximum |
|---|---|---|---|
| m1 | -8 | -400 | 400 |
| d1 | 0,000005 | 0 | 1 |
| c1 | 170 | 110 | 1000 |
| m2 | -IT*e^(100*dinitial) -TI | -400 | max(-399, -IT*e^(100*dinitial) -TI) |
| d2 | 0,005 | 0,005 | 0,05 |
| z | running time [in s]/4 | 0 | running time [in s]/4 |

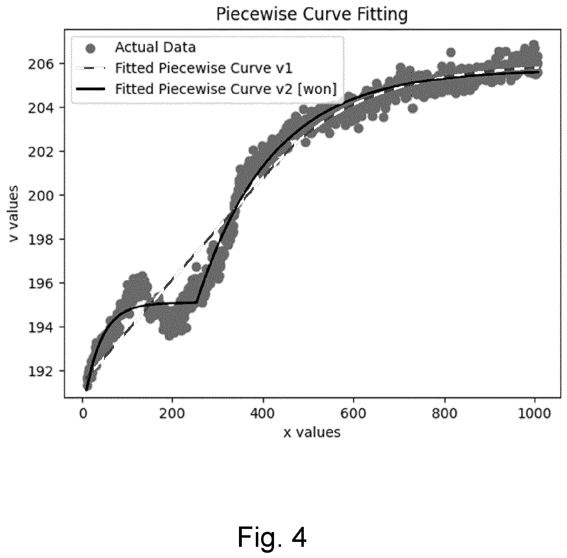

According to the method of the invention, the change in the determined specific average brightness over time is compared with the two models 7, 8 for different expected changes of specific brightness over time during optical clearing of biospecimen 2 over time. For the embodiment shown in Fig. 4 this comparison results in choosing the second model 8 of the two models 7, 8 because the second model 8 best fits to the change in the determined specific average brightness over time.

Afterwards, the chosen second model 8 is used for deciding whether the optical clearing of the biospecimen 2 in the container 3 has reached a required transparency and terminating the optical clearing process when the required transparency has been reached.

### List of reference numerals

- 1: System
- 2: biospecimen
- 3: container
- 4: light source
- 5: camera
- 6: processing unit
- 7: first model
- 8: second model

## Claims

1. Method for controlling an optical clearing of a biospecimen (2), particularly for an automated tissue preserving histopathologic analysis, wherein the biospecimen (2) is stored in an optically transparent container (3), which is filled with a clearing solution, the method comprising the steps of:
a. illuminating the container (3) by a light source (4) with a light having a pre-defined wavelength;
b. taking images of the container (3) and the biospecimen (2) inside the container (3);
c. processing the images in a processing unit (6), wherein the processing unit (6)performs the steps of:
i. calculating the general average brightness of the images;
ii. detecting areas in each image having a brightness in a first defined range with respect to the calculated general average brightness;
iii. detecting areas in each image having a brightness in a second defined range with respect to the calculated general average brightness;
iv. calculating an area relating to uncleared portions of the biospecimen (2) in the container (3) by considering all areas with a brightness in the first defined range and adding areas with a brightness in the second defined range if the distance to an area with a brightness in the first defined range is within a first defined limit or if the distance to an added area with a brightness in the second defined range is within a second defined limit;
v. comparing the calculated area to an initial area of the uncleared biospecimen (2) in the container (3) and uniformly increasing the calculated area in all directions until the increased calculated area corresponds to the initial area of the uncleared biospecimen (2) in the container (3);
vi. determining a specific average brightness of the increased calculated area;
vii. repeating steps i. to vi. for the images taken over time and analyzing the change in the determined specific average brightness by:
I. comparing the change in the determined specific average brightness over time with at least two models (7, 8) for different expected changes of specific brightness over time during optical clearing of biospecimen (2) over time;
II. choosing one model (7, 8) of the at least two models (7, 8), which best fits to the change in the determined specific average brightness over time; and
III. using the chosen model (7, 8) for deciding whether the optical clearing of the biospecimen (2) in the container (3) has reached a required transparency and terminating the optical clearing process when the required transparency has been reached.

2. Method for controlling an optical clearing of a biospecimen (2) according to claim 1,
wherein the initial area of the uncleared biospecimen (2) is defined based on one or more of the earliest images taken from the biospecimen (2) in the container (3) during step b., wherein the initial area is calculated according to steps i. to iv. and includes an average initial area if multiple of the earliest images are used.

3. Method for controlling an optical clearing of a biospecimen (2) according to claim 1,
wherein the initial area is received from a method relating to a previous treatment of the biospecimen (2) in the container (3).

4. Method for controlling an optical clearing of a biospecimen (2) according to any of claims 1 to 3,
wherein the light of the light source (4) has at least a wavelength between 380 nm und 780 nm.

5. Method for controlling an optical clearing of a biospecimen (2) according to any of claims 1 to 4,
wherein step vi. considers the brightness of light with a wavelength between 380 nm and 500 nm.

6. Method for controlling an optical clearing of a biospecimen (2) according to any of claims 1 to 5,
further comprising the step of masking the images before step i., wherein the masking relates to the contours of the container (3) containing the biospecimen (2).

7. Method for controlling an optical clearing of a biospecimen (2) according to any of claims 1 to 6,
wherein the first defined range is between 92 % and 100 % of the average brightness.

8. Method for controlling an optical clearing of a biospecimen (2) according to any of claims 1 to 7,
wherein the second defined range is between 80 % and 92 % of the average brightness.

9. Method for controlling an optical clearing of a biospecimen (2) according to any of claims 1 to 8,
wherein step iv. further comprises the step of enlarging the calculated area by including edge areas of the added areas.

10. Method for controlling an optical clearing of a biospecimen (2) according to claim 9,
wherein the enlarging bases on drawing a circle around all added areas with a defined radius and including the encircled areas into the added area.

11. Method for controlling an optical clearing of a biospecimen (2) according to any of claims 1 to 10,
wherein step vii. is initiated the first time after a threshold period.

12. Method for controlling an optical clearing of a biospecimen (2) according to any of claims 1 to 11,
wherein step I. bases on the sum of the quadratic difference between the determined specific average brightness over time and the expected changes of specific brightness over time during optical clearing of biospecimen over time of the at least two models (7, 8), wherein in step II. the model (7, 8) with the smaller sum of quadratic difference is chosen.

13. Method for controlling an optical clearing of a biospecimen (2) according to any of claims 1 to 12,
wherein the images in step b. are taken from an opposite side of the container (3) with respect to the light source (4).

14. Method for controlling an optical clearing of a biospecimen (2) according to any of claims 1 to 13,
wherein step c comprises an initial step of separating a reference channel from the image.

15. System for controlling an optical clearing of a biospecimen (2), particularly for an automated tissue preserving histopathologic analysis, comprising:
an optically transparent container (3), in which a biospecimen (2) can be stored;
a light source (4) with a light having a pre-defined wavelength for illuminating the optically transparent container (3);
a camera (5) for taking images of the container (3) and the biospecimen (2) inside the container (3); and
processing unit (6) for processing the images;
wherein the system is configured to implement the method according to any of claims 1 to 14.

## Patentansprüche

1. Verfahren zur Steuerung einer optischen Klärung einer Bioprobe (2), insbesondere für eine automatisierte, gewebekonservierende histopathologische Analyse, wobei die Bioprobe (2) in einem optisch transparenten Behälter (3) aufbewahrt wird, der mit einer Klärlösung gefüllt ist, wobei das Verfahren die folgenden Schritte umfasst:
a. Beleuchten des Behälters (3) mittels einer Lichtquelle (4) mit einem Licht in einer vorbestimmten Wellenlänge;
b. Aufnehmen von Bildern des Behälters (3) und der Bioprobe (2) im Inneren des Behälters (3);
c. Verarbeitung der Bilder in einer Verarbeitungseinheit (6), wobei die Verarbeitungseinheit (6) die folgenden Schritte ausführt:
i. Berechnung der allgemeinen durchschnittlichen Helligkeit der Bilder;
ii. Erkennen von Flächen in jedem Bild, die eine Helligkeit in einem ersten definierten Bereich in Bezug auf die berechnete allgemeine durchschnittliche Helligkeit aufweisen;
iii. Erkennen von Flächen in jedem Bild, die eine Helligkeit in einem zweiten definierten Bereich in Bezug auf die berechnete allgemeine Durchschnittshelligkeit aufweisen;
iv. Berechnen einer Fläche, die sich auf die nicht geklärte Teile der Bioprobe (2) im Behälter (3) bezieht, indem alle Flächen mit einer Helligkeit im ersten definierten Bereich berücksichtigt werden und die Flächen mit einer Helligkeit im zweiten definierten Bereich hinzugenommen werden, wenn der Abstand zu einer Fläche mit einer Helligkeit im ersten definierten Bereich innerhalb einer ersten definierten Grenze liegt oder wenn der Abstand zu einer hinzugefügten Fläche mit einer Helligkeit im zweiten definierten Bereich innerhalb einer zweiten definierten Grenze liegt;
v. Vergleichen der berechneten Fläche mit einer Ausgangsfläche der nicht geklärten Bioprobe (2) im Behälter (3) und gleichmäßigem Vergrößern der berechneten Flächen in alle Richtungen, bis die vergrößerte berechnete Fläche der Ausgangsfläche der nicht geklärten Bioprobe (2) im Behälter (3) entspricht;
vi. Bestimmen einer spezifischen durchschnittlichen Helligkeit der vergrößerten berechneten Fläche;
vii. Wiederholen der Schritte i. bis vi. für die über die Zeit aufgenommenen Bilder und Analysieren der Veränderung der ermittelten spezifischen Durchschnittshelligkeit durch:
I. Vergleich der Veränderung der ermittelten spezifischen Durchschnittshelligkeit über die Zeit mit mindestens zwei Modellen (7, 8) für unterschiedliche erwartete Veränderungen der spezifischen Helligkeit über die Zeit während der optischen Klärung der Bioprobe (2) über die Zeit;
II. Auswahl eines Modells, (7, 8) aus den mindestens zwei Modellen (7, 8), das am besten zur Veränderung der ermittelten spezifischen Durchschnittshelligkeit über die Zeit passt; und
III. Verwendung des ausgewählten Modells (7, 8) zur Entscheidung, ob die optische Klärung der Bioprobe (2) im Behälter (3) eine erforderliche Transparenz erreicht hat, und Beendigung des optischen Klärungsprozesses, wenn die erforderliche Transparenz erreicht wurde.

2. Verfahren zur Steuerung einer optischen Klärung einer Bioprobe (2) gemäß Anspruch 1,
wobei die Ausgangsfläche der nicht geklärten Bioprobe (2) auf Grundlage eines oder mehrerer der frühesten Bilder definiert wird, die während Schritt b. von der Bioprobe (2) im Behälter (3) aufgenommen wurden, wobei die Ausgangsfläche gemäß den Schritten i. bis iv. berechnet wird und eine durchschnittliche Ausgangsfläche umfasst, wenn mehrere der frühesten Bilder verwendet werden.

3. Verfahren zur Steuerung einer optischen Klärung einer Bioprobe (2) gemäß Anspruch 1,
wobei die Ausgangsfläche durch ein Verfahren erhalten wird, das sich auf eine vorherige Behandlung der Bioprobe (2) im Behälter (3) bezieht.

4. Verfahren zur Steuerung einer optischen Klärung einer Bioprobe (2) gemäß einem der Ansprüche 1 bis 3,
wobei das Licht der Lichtquelle (4) eine Wellenlänge von mindestens 380 nm bis 780 nm aufweist.

5. Verfahren zur Steuerung einer optischen Klärung einer Bioprobe (2) gemäß einem der Ansprüche 1 bis 4,
wobei in Schritt vi. die Helligkeit des Lichts mit einer Wellenlänge zwischen 380 nm und 500 nm berücksichtigt wird.

6. Verfahren zur Steuerung einer optischen Klärung einer Bioprobe (2) gemäß einem der Ansprüche 1 bis 5,
welches ferner den Schritt des Maskierens der Bilder vor Schritt i. umfasst, wobei sich das Maskieren auf die Konturen des Behälters (3) bezieht, der die Bioprobe (2) enthält.

7. Verfahren zur Steuerung einer optischen Klärung einer Bioprobe (2) gemäß einem der Ansprüche 1 bis 6,
wobei der erste definierte Bereich zwischen 92 % und 100 % der durchschnittlichen Helligkeit liegt.

8. Verfahren zur Steuerung einer optischen Klärung einer Bioprobe (2) gemäß einem der Ansprüche 1 bis 7,
wobei der zweite definierte Bereich zwischen 80 % und 92 % der durchschnittlichen Helligkeit liegt.

9. Verfahren zur Steuerung einer optischen Klärung einer Bioprobe (2) gemäß einem der Ansprüche 1 bis 8,
wobei Schritt iv. ferner den Schritt des Vergrößerns der berechneten Fläche durch Einbeziehen von Randbereichen der hinzugefügten Flächen umfasst.

10. Verfahren zur Steuerung einer optischen Klärung einer Bioprobe (2) gemäß Anspruch 9,
wobei die Vergrößerung darauf beruht, dass um alle hinzugefügten Flächen ein Kreis mit einem definierten Radius gezogen wird und die umkreisten Bereiche in der hinzugefügten Fläche einbezogen werden.

11. Verfahren zur Steuerung einer optischen Klärung einer Bioprobe (2) gemäß einem der Ansprüche 1 bis 10,
wobei Schritt vii. zum ersten Mal nach einer Schwellenzeit eingeleitet wird.

12. Verfahren zur Steuerung einer optischen Klärung einer Bioprobe (2) gemäß einem der Ansprüche 1 bis 11,
wobei Schritt I. auf der Summe der quadratischen Differenz zwischen der ermittelten spezifischen Durchschnittshelligkeit über die Zeit und den erwarteten Änderungen der spezifischen Helligkeit über die Zeit während der optischen Klärung der Bioprobe über die Zeit der mindestens zwei Modelle (7, 8) basiert, in welchem in Schritt II. das Modell (7, 8) mit der geringeren Summe der quadratischen Differenz ausgewählt wird.

13. Verfahren zur Steuerung einer optischen Klärung einer Bioprobe (2) gemäß einem der Ansprüche 1 bis 12,
wobei die Bilder in Schritt b. bezogen auf die Lichtquelle (4) von der gegenüberliegenden Seite des Behälters (3) aufgenommen werden.

14. Verfahren zur Steuerung einer optischen Klärung einer Bioprobe (2) gemäß einem der Ansprüche 1 bis 13,
wobei Schritt c einen ersten Schritt umfasst, bei dem ein Referenzkanal aus dem Bild herausgefiltert wird.

15. System zur Steuerung einer optischen Klärung einer Bioprobe (2), insbesondere für eine automatisierte geweberhaltende histopathologische Analyse, umfassend:
einen optisch transparenten Behälter (3), in dem eine Bioprobe (2) aufbewahrt werden kann;
eine Lichtquelle (4) mit einem Licht in einer vordefinierten Wellenlänge zur Beleuchtung des optisch transparenten Behälters (3);
eine Kamera (5) zum Aufnehmen von Bildern des Behälters (3) sowie der Bioprobe (2) im Inneren des Behälters (3); und
eine Verarbeitungseinheit (6) zur Verarbeitung der Bilder;
wobei das System so konfiguriert ist, dass das Verfahren gemäß einem der Ansprüche 1 bis 14 ausgeführt wird.

## Revendications

1. Procédé pour commander une clarification optique d'un échantillon biologique (2), en particulier pour une analyse histopathologique automatisée préservant le tissu, dans lequel l'échantillon biologique (2) est stocké dans un récipient (3) optiquement transparent, qui est rempli d'une solution de clarification, le procédé comprenant les étapes de :
a. éclairage du récipient (3) par une source lumineuse (4) avec une lumière ayant une longueur d'onde prédéfinie ;
b. prise d'images du récipient (3) et de l'échantillon biologique (2) à l'intérieur du récipient (3) ;
c. traitement des images dans une unité de traitement (6), dans lequel l'unité de traitement (6) effectue les étapes de :
i. calcul de la luminosité moyenne générale des images ;
ii. détection de zones dans chaque image ayant une luminosité dans une première plage définie par rapport à la luminosité moyenne générale calculée ;
iii. détection de zones dans chaque image ayant une luminosité dans une deuxième plage définie par rapport à la luminosité moyenne générale calculée ;
iv. calcul d'une zone relative à des parties non clarifiées de l'échantillon biologique (2) dans le récipient (3) en considérant toutes les zones avec une luminosité dans la première plage définie et en ajoutant des zones avec une luminosité dans la deuxième plage définie si la distance à une zone avec une luminosité dans la première plage définie est dans une première limite définie ou si la distance à une zone ajoutée avec une luminosité dans la deuxième plage définie est dans une deuxième limite définie ;
v. comparaison de la zone calculée à une zone initiale de l'échantillon biologique (2) non clarifié dans le récipient (3) et augmentation uniforme de la zone calculée dans toutes les directions jusqu'à ce que la zone calculée augmentée corresponde à la zone initiale de l'échantillon biologique (2) non clarifié dans le récipient (3) ;
vi. détermination d'une luminosité moyenne spécifique de la zone calculée augmentée ;
vii. répétition des étapes i. à vi. pour les images prises au fil du temps et analyse du changement de la luminosité moyenne spécifique déterminée par :
I. comparaison du changement de la luminosité moyenne spécifique déterminée au fil du temps avec au moins deux modèles (7, 8) pour différents changements attendus de luminosité spécifique au fil du temps pendant la clarification optique de l'échantillon biologique (2) au fil du temps ;
II. choix d'un modèle (7, 8) parmi les au moins deux modèles (7, 8), qui correspond le mieux au changement de la luminosité moyenne spécifique déterminée au fil du temps ; et
III. utilisation du modèle (7, 8) choisi pour décider si la clarification optique de l'échantillon biologique (2) dans le récipient (3) a atteint une transparence requise et terminaison du processus de clarification optique lorsque la transparence requise a été atteinte.

2. Procédé pour commander une clarification optique d'un échantillon biologique (2) selon la revendication 1,
dans lequel la zone initiale de l'échantillon biologique (2) non clarifié est définie sur la base d'une ou plusieurs des images prises précédemment de l'échantillon biologique (2) dans le récipient (3) pendant l'étape b., dans lequel la zone initiale est calculée selon les étapes i. à iv. et comprend une zone initiale moyenne si plusieurs des premières images sont utilisées.

3. Procédé pour commander une clarification optique d'un échantillon biologique (2) selon la revendication 1,
dans lequel la zone initiale est obtenue à partir d'un procédé relatif à un traitement précédent de l'échantillon biologique (2) dans le récipient (3).

4. Procédé pour commander une clarification optique d'un échantillon biologique (2) selon l'une quelconque des revendications 1 à 3,
dans lequel la lumière de la source lumineuse (4) a au moins une longueur d'onde comprise entre 380 nm et 780 nm.

5. Procédé pour commander une clarification optique d'un échantillon biologique (2) selon l'une quelconque des revendications 1 à 4,
dans lequel l'étape vi. considère la luminosité de la lumière avec une longueur d'onde comprise entre 380 nm et 500 nm.

6. Procédé pour commander une clarification optique d'un échantillon biologique (2) selon l'une quelconque des revendications 1 à 5,
comprenant en outre l'étape de masquage des images avant l'étape i., dans lequel le masquage concerne les contours du récipient (3) contenant l'échantillon biologique (2).

7. Procédé pour commander une clarification optique d'un échantillon biologique (2) selon l'une quelconque des revendications 1 à 6,
dans lequel la première plage définie est comprise entre 92 % et 100 % de la luminosité moyenne.

8. Procédé pour commander une clarification optique d'un échantillon biologique (2) selon l'une quelconque des revendications 1 à 7,
dans lequel la deuxième plage définie est comprise entre 80 % et 92 % de la luminosité moyenne.

9. Procédé pour commander une clarification optique d'un échantillon biologique (2) selon l'une quelconque des revendications 1 à 8,
dans lequel l'étape iv. comprend en outre l'étape d'agrandissement de la zone calculée en incluant des zones de bord des zones ajoutées.

10. Procédé pour commander une clarification optique d'un échantillon biologique (2) selon la revendication 9,
dans lequel l'agrandissement est basé sur le dessin d'un cercle autour de toutes les zones ajoutées avec un rayon défini et incluant les zones encerclées dans la zone ajoutée.

11. Procédé pour commander une clarification optique d'un échantillon biologique (2) selon l'une quelconque des revendications 1 à 10,
dans lequel l'étape vii. est initiée pour la première fois après une période de seuil.

12. Procédé pour commander une clarification optique d'un échantillon biologique (2) selon l'une quelconque des revendications 1 à 11,
dans lequel l'étape I. est basée sur la somme de la différence quadratique entre la luminosité moyenne spécifique déterminée au fil du temps et les changements attendus de luminosité spécifique au fil du temps pendant la clarification optique de l'échantillon biologique au fil du temps des au moins deux modèles (7, 8), dans lequel à l'étape II. le modèle (7, 8) avec la plus petite somme de différence quadratique est choisi.

13. Procédé pour commander une clarification optique d'un échantillon biologique (2) selon l'une quelconque des revendications 1 à 12,
dans lequel les images de l'étape b. sont prises d'un côté opposé du récipient (3) par rapport à la source lumineuse (4).

14. Procédé pour commander une clarification optique d'un échantillon biologique (2) selon l'une quelconque des revendications 1 à 13,
dans lequel l'étape c comprend une étape initiale de séparation d'un canal de référence de l'image.

15. Système pour commander une clarification optique d'un échantillon biologique (2), en particulier pour une analyse histopathologique automatisée préservant le tissu, comprenant :
un récipient (3) optiquement transparent, dans lequel un échantillon biologique (2) peut être stocké ;
une source lumineuse (4) avec une lumière ayant une longueur d'onde prédéfinie pour éclairer le récipient (3) optiquement transparent ;
une caméra (5) pour prendre des images du récipient (3) et de l'échantillon biologique (2) à l'intérieur du récipient (3) ; et
une unité de traitement (6) pour traiter les images ;
dans lequel le système est configuré pour mettre en œuvre le procédé selon l'une quelconque des revendications 1 à 14.
